(19) Europäisches Patentamt
European Patent Office
Office européen des brevets

(11) Veröffentlichungsnummer: **0 188 685 B1**

# (12) EUROPÄISCHE PATENTSCHRIFT

(45) Veröffentlichungstag der Patentschrift: **15.05.91**

(51) Int. Cl.[5]: **B60T 17/22**

(21) Anmeldenummer: **85114416.2**

(22) Anmeldetag: **13.11.85**

## (54) Überlast-Schutz- und/oder -Warneinrichtung.

(30) Priorität: **20.01.85 DE 3502825**

(43) Veröffentlichungstag der Anmeldung:
**30.07.86 Patentblatt 86/31**

(45) Bekanntmachung des Hinweises auf die Patenterteilung:
**15.05.91 Patentblatt 91/20**

(84) Benannte Vertragsstaaten:
**DE FR GB IT SE**

(56) Entgegenhaltungen:
**DE-A- 2 917 157**
**DE-A- 3 018 188**

(73) Patentinhaber: **WABCO Westinghouse Fahrzeugbremsen GmbH**
**Am Lindener Hafen 21 Postfach 91 12 80**
**W-3000 Hannover 91(DE)**

(72) Erfinder: **Feldmann, Joachim, Ing. grad.**
**Auf dem Papenberg 8**
**W-3057 Neustadt 2(DE)**
Erfinder: **Schult, Mafred, Dr. Ing.**
**Carl-Zuckmayer-Strasse 4**
**W-3008 Garbsen 8(DE)**

(74) Vertreter: **Schrödter, Manfred**
**WABCO Westinghouse Fahrzeugbremsen GmbH Am Lindener Hafen 21 Postfach 91 12 80**
**W-3000 Hannover 91(DE)**

**EP 0 188 685 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft Überlast-Schutz- und/oder -Warneinrichtungen nach den Oberbegriffen der Patentansprüche 1 und 2.

Aus der internationalen Patentanmeldung WO 84/00406 ist es bekannt, als Maß für die Belastung der Bremse mittels an feststehenden Bremsbauteilen angeordneter Temperatursensoren die Temperatur in der Nähe der Bremstrommel oder der Bremsscheibe zu überwachen. Mittels eines Temperaturvergleichers wird beim Auftreten einer ungewöhnlich hohen Temperatur ein Warnkreis mit einer optischen und akustischen Warnanzeige geschlossen.

Nachteilig ist bei diesem Stand der Technik die Trägheit der Temperaturüberwachung. Die ungewöhnlich hohe Temperatur und damit die Belastung der Bremse kann schon ein schädliches Ausmaß angenommen haben, bevor infolge der erwähnten Trägheit die Warnanzeige erfolgt.

Die aus der DE-A-30 18 188 bekannte Überlast-Schutz- und/oder -Warneinrichtung vereinigt in sich die gattungsbildenden Merkmale der Patentansprüche 1 und 2. Diese Einrichtung mißt bei einer Bremsbetätigung das Ist-Bremsmoment und die an einem Bremspedal als Stellglied der Betätigungseinrichtung aufgebrachte Ist-Pedalkraft. Die so gewonnenen Werte setzt diese Einrichtung nach dem Hauptanspruch ins Verhältnis und wertet dieses vorzugsweise elektronisch aus. Dabei ist laut Beschreibung unter "ins Verhältnis Setzen" und "elektronischer Auswertung" zu verstehen, daß in der Auswerteeinrichtung in einem elektronisch gespeicherten Bremsmoment/Pedalkraft-Kennfeld der durch das Ist-Bremsmoment und die Ist-Pedalkraft bestimmte Ist-Betriebspunkt aufgesucht wird und überprüft wird, ob dieser sich in einem Soll-Bereich "guter Bremsenzustand befindet". Liegt der Ist-Betriebspunkt außerhalb des Soll-Bereichs "guter Bremsenzustand", gibt die Auswerteeinrichtung ein Warnsignal ab.

Die bekannte Einrichtung funktioniert nur, wenn ein schlechter Bremsenzustand in Gestalt einer überlasteten Fahrzeugbremse sich in einem Abfall des Ist-Bremsmoments äußert. Dies ist nicht der Fall, wenn bei der Bremsbetätigung nicht der Bremsdruck, sondern ein anderer Bremsparameter die Regelgröße ist. Als ein anderer Bremsparameter kommen beispielsweise die Bremskraft bzw. das Bremsmoment, die Fahrzeugverzögerung und die Kraftschlußausnutzung zwischen Rad und Fahrbahn in Betracht. In einem solchen Fall wird durch die Pedalkraft als Kraft auf das Stellglied der Betätigungseinrichtung nicht ein Soll-Bremsdruck, sondern ein Sollwert des betreffenden Bremsparameters vorgegeben. Will der betreffende Bremsparameter infolge Überlastung der Fahrzeugbremse abfallen, so wird dem mittels einer entsprechenden Regeleinrichtung in der Betätigungseinrichtung automatisch durch Erhöhung des Ist-Bremsdruckes entgegengewirkt. In einem solchen Fall kann trotz Einhaltung des Sollwertes des betreffenden Parameters die Fahrzeugbremse überlastet sein.

Der vorliegenden Erfindung liegt deshalb die Aufgabe zugrunde, Überlast-Schutz- und/oder -Warneinrichtungen der eingangs genannten Arten mit einfachen Mitteln für einen Einsatzfall, bei dem nicht der Bremsdruck die Regelgröße ist, funktionsfähig zu machen.

Diese Aufgabe wird durch die in den Patentansprüchen 1 und 2 angegebene Erfindung gelöst. Weiterbildungen und vorteilhafte Ausgestaltungen der Erfindung sind in den Unteransprüchen angegeben.

Die Erfindung bewirkt auch eine weitgehend verzögerungsfreie Abgabe des Warnsignals.

Werden das Fahrzeug und die Fahrzeugbremse einschließlich der Zuspanneinrichtung und der Betätigungseinrichtung als Regelstrecke angesehen, so läßt sich die Erfindung nach dem Patentanspruch 1 vorteilhaft dann anwenden, wenn bei der Bremsbetätigung nicht der Bremsdruck die Regelgröße ist. Beispielsweise könnte eine Soll-Kraftschlußausnutzung zwischen Rad und Fahrbahn als Regelgröße dienen.

Nach dem Patentanspruch 2 hingegen läßt sich die Erfindung vorteilhaft mit jeder beliebigen Regelgröße, also auch mit dem Bremsdruck als Regelgröße, realisieren. Ein Fall, bei dem der Bremsdruck die Regelgröße darstellt, ist beispielsweise gegeben, wenn die Höhe des Bremsdrucks in bekannter Weise mittels eines Bremsdruckventils abhängig von der auf dieses einwirkenden Pedal- bzw. Hebelkraft oder abhängig von dem Betätigungsweg bzw. Betätigungswinkel von Pedal bzw. Hebel gesteuert wird.

In bevorzugten Ausführungsformen läßt sich die Erfindung ausführen, wenn als Betätigungseinrichtung eine elektrische Regeleinrichtung für die Bremskraft bzw. das Bremsmoment oder für die Fahrzeugverzögerung vorgesehen ist. In diesen Fällen wird mittels eines Bremswertgebers ein Sollwert für die Bremskraft bzw. das Bremsmoment oder die Fahrzeugverzögerung vorgegeben. In seiner Stärke ist der Sollwert abhängig von der Betätigungskraft, die auf ein Stellglied des Sollwertgebers ausgeübt wird, oder von dem Stellweg oder dem Stellwinkel, um den das Stellglied bewegt wird. Mittels einer Regelelektronik wird bei einer Betätigung des Bremswertgebers ein elektrisch steuerbares Ventil so lange geöffnet, bis sich in der Zuspanneinrichtung ein Bremsdruck aufgebaut hat, bei dem die von der Regelelektronik überwachte Bremskraft bzw. das Bremsmoment oder die Fahrzeugverzögerung der Sollwertvorgabe entsprechen. Treten nach dem Erreichen des Sollwertes Abweichungen auf, so wird das Ventil von der Regelelektronik je

nach Art der Abweichung im Sinne weiterer Bremsdruckzufuhr oder eines Bremsdruckabbaus gesteuert. In diesen Fällen bilden also die auf das Stellglied des Bremswertgebers ausgeübte Betätigungskraft oder der Stellweg bzw. Stellwinkel des Stellglieds die Führungsgröße, der Bremsdruck die Stellgröße und die Bremskraft bzw. das Bremsmoment oder die Fahrzeugverzögerung die Regelgröße der elektrischen Regeleinrichtung.

Die Erfindung läßt sich für eine einzelne Fahrzeugbremse, aber auch für eine Bremsanlage mit einzelnen Fahrzeugbremsen ausführen, wobei die Betätigungseinrichtung teils allen Fahrzeugbremsen gemeinsam, teils für die einzelnen Fahrzeugbremsen getrennt oder für Gruppen von einzelnen Fahrzeugbremsen zusammengefaßt ausgeführt sein kann. Auch die Vergleichseinrichtung kann bei einer Bremsanlage aus einzelnen Fahrzeugbremsen für jede Fahrzeugbremse getrennt oder für Gruppen von Fahrzeugbremsen oder für alle Fahrzeugbremsen zusammengefaßt ausgeführt werden.

Es ist auch möglich, der Betätigungseinrichtung der Fahrzeugbremse oder, im Fall einer Bremsanlage, einzelner Fahrzeugbremsen oder Gruppen von Fahrzeugbremsen weitere Funktionen, beispielsweise eine lastabhängige Bremsdruckregelung (ALB) oder eine Blockierschutzeinrichtung (ABS) zuzuordnen.

Tritt bei einer bekannten Fahrzeugbremse mit als elektrische Regeleinrichtung, insbesondere der oben näher beschriebenen Arten, ausgebildeter Betätigungseinrichtung infolge Temperaturfadings ein Abfall der Regelgröße, nämlich ein Bremskraft- bzw. Bremsmomentabfall oder Abfall der Fahrzeugverzögerung auf, so sorgt, wie beschrieben, die Regelelektronik durch Bremsdrucknachschub für die Nachregelung der Regelgröße auf die Sollwertvorgabe, ohne daß der Fahrer das Auftreten des Temperaturfadings bemerkt. Da Temperaturfading stets ein Zeichen von Höchstbelastung oder Überlastung der Fahrzeugbremse infolge hoher Energieaufnahme ist, läuft der Fahrer in Unkenntnis des kritischen Zustandes der Fahrzeugbremse Gefahr, diese bis zur Zerstörung zu betätigen. Die Erfindung ist daher geeignet, den Fahrer wegen der Gefährdung der Fahrzeugbremse zu warnen. Zu diesem Zweck ist das von der Vergleichseinrichtung abgegebene Warnsignal einer Warneinrichtung mit einer optischen oder akustischen Warnanzeige zuzuführen.

Es wäre auch denkbar, mittels des Warnsignals eine Bremsentlastungseinrichtung zu steuern, die das in der Bremsdruckzuführung zu der Zuspanneinrichtung angeordnete Ventil bei Erhalt des Warnsignals im Sinne eines Bremsdruckabbaus oder der Verhinderung eines weiteren Bremsdrucknachschubs steuert und damit einen automatischen Überlastschutz für die Fahrzeugbremse bewirkt. Dem Fahrer teilt sich der Eingriff der Bremsentlastungseinrichtung als Verlust an Bremswirkung mit. Wie bei einer bekannten und weitgehend üblichen Bremsanlage mit Bremsdrucksteuerung wird dem Fahrer durch den Verlust an Bremswirkung ein Gefühl für das Temperaturfading der Fahrzeugbremse vermittelt. Es liegt auf der Hand, daß diese für eine Fahrzeugbremse gemachten Ausführungen für eine Bremsanlage bzw. deren einzelne Fahrzeugbremsen in entsprechender Weise gelten.

Die Erfindung wird nachstehend anhand von Ausführungsbeispielen, die in den Zeichnungen dargestellt sind, erläutert.

Es zeigen

- Fig. 1 schematisch eine Bremsanlage, in der die Bremskraft bzw. das Bremsmoment die Regelgröße bildet,
- Fig. 2 schematisch eine Bremsanlage, in der die Fahrzeugverzögerung die Regelgröße bildet.

In den Zeichnungen sind Positionen mit gleicher Funktion einheitlich mit gleichen Bezugszeichen belegt. Ferner gelten in allen Zeichnungen der Index "a" für die rechte Fahrzeugseite, der Index "b" für die linke Fahrzeugseite. Außerdem bezeichnen einheitlich durchgehend gezeichnte Linien Bremsdruckleitungen und strich-punktiert gezeichnete Linien elektrische Verbindungen bzw. Leitungen.

Die in Fig. 1 dargestellte Bremsanlage weist einen Vorderachskreis mit einer Fahrzeugbremse für jede Fahrzeugseite auf, die einschließlich der jeweils zugeordneten Zuspanneinrichtung mit 1a bzw. 1b bezeichnet sind. Die Zuspanneinrichtung jeder Bremse 1a und 1b ist über ein eigenes elektrisch gesteuertes Ventil 4a und 4b mit Bremsdruck aus einem Bremsdruckvorrat 16 beaufschlagbar.

Die Bremsanlage weist des weiteren einen Hinterachs-Kreis (HA-Kreis) mit ebenfalls einer Fahrzeugbremse je Fahrzeugseite auf, die einschließlich ihrer jeweils zugeordneten Zuspanneinrichtung mit 11a bzw. 11b bezeichnet sind. Die Zuspanneinrichtungen der Bremsen 11a bzw. 11b sind über je ein eigenes elektrisch gesteuertes Ventil 9a bzw. 9b mit Bremsdruck aus einem Bremsdruckvorrat 14 beaufschlagbar.

Der in den Zuspanneinrichtungen anstehende Bremsdruck wird durch jeweils einen Bremsdrucksensor 3a bzw. 3b bzw. 10a bzw. 10b gemessen, die bremsdruckabhängige elektrische Ausgangssignale, im folgenden Ist-Bremsdrucksignale, liefern.

Jeder der Bremsen 1a, 1b, 11a, 11b ist jeweils ein Bremskraftsensor 2a bzw. 2b bzw. 12a bzw. 12b zugeordnet, welche die von der jeweils zugeordneten Fahrzeugbremse erzeugte Bremskraft messen und von deren Höhe abhängige Ausgangssignale als Ist-Bremskraftsignale liefern. Die Ist-Bremskraftsignale

können, wie für den Fachmann ersichtlich, auch als Ist-Bremsmomentensignale ausgewertet werden.

Dem HA-Kreis ist ferner ein Lastsensor 13 zugeordnet, der die Hinterachslast mißt und davon abhängige Lastsignale abgibt.

Als Betätigungseinrichtung für jede der Fahrzeugbremsen 1a, 1b, 11a, 11b und damit für die Bremsanlage ist eine elektrische Regeleinrichtung vorgesehen, deren Regelgröße die Bremskraft ist. Diese Regeleinrichtung besteht aus einem Bremswertgeber 6 und einer Auswerteeinrichtung 15, welch letztere zusammen mit den Bremskraftsensoren 2a, 2b, 12a, 12b und dem Lastsensor 13 eine Regelelektronik bildet.

Eine Vergleichseinrichtung 5 ist dem VA-Kreis, eine weitere Vergleichseinrichtung 7 ist dem HA-Kreis zugeordnet. Es liegt auf der Hand, daß diese Vergleichseinrichtungen sowohl untereinander als auch ganz oder teilweise mit der Auswerteeinrichtung 15 bzw. der Regelektronik vereinigt sein können. Jede der Vergleichseinrichtungen 5 bzw. 7 ist mit der Auswerteeinrichtung 15 verbunden. Außerdem sind die Vergleichseinrichtung 5 mit den Bremsdrucksensoren 3a, 3b der VA und die Vergleichseinrichtung 7 mit den Bremsdrucksensoren 10a, 10b dar HA verbunden.

Mit 8 ist eine Warnanlage bezeichnet, die mit Ausgängen der Vergleichseinrichtungen 5,7 verbunden ist.

Der Bremswertgeber 6 weist ein Stellglied auf, beispielsweise ein Pedal. Er wird durch Betätigung des Stellgliedes betätigt. Bei Betätigung gibt er ein von dem Stellweg bzw. dem Stellwinkel des Stellgliedes oder der darauf einwirkenden Betätigungskraft abhängiges Signal, im folgenden mit s-Signal oder einfach s bezeichnet, ab.

Die Funktion der Bremsanlage sei zunächst anhand der Fahrzeugbremse 1a und der zugehörigen Einrichtungen erläutert. Die Auswerteeinrichtung 15 errechnet aus dem zugeführten s-Signal ein Soll-Bremskraftsignal. Die Auswerteeinrichtung 15 vergleicht das vom Bremskraftsensor 2a abgegebene Ist-Bremskraftsignal mit dem Soll-Bremskraftsignal und steuert das Ventil 4a solange in Öffnungsstellung, bis aus dem Bremsdruckvorrat 16 in die Zuspanneinrichtung der Fahrzeugbremse 1a ein Bremsdruck $p_{ist}$ überströmt ist, bei dem das durch die von der Fahrzeugbremse 1a erzeugte Bremskraft hervorgerufene Ist-Bremskraftsignal dem Soll-Bremskraftsignal mit einer vorbestimmten Genauigkeit entspricht. Tritt nach dem Schließen des Ventils 4a eine Veränderung der Bremskraft und damit eine Abweichung des Ist-Bremskraftsignals auf, steuert die Auswerteeinrichtung 15 das Ventil 4a je nach Art der Abweichung im Sinne einer Verringerung oder einer Anhebung von $p_{ist}$ bis zur Wiederherstellung der Entsprechung von Soll- und Ist-Bremskraftsignal.

Gleichzeitig errechnet die Auswerteeinrichtung 15 aus dem Soll-Bremskraftsignal ein Rechnungs-Bremsdrucksignal, welches einen nach der allgemeinen Formel

$$p_{Rech} = \frac{B_{soll}}{A} \qquad (I)$$

zu ermittelnden Rechnungs-Bremsdruck bezeichnet, wobei

A eine die Auslegungsdaten von Fahrzeugbremse und Zuspanneinrichtung (innere Kennung, Wirkfläche der Zuspanneinrichtung, Übersetzungsverhältnis und Wirkungsgrade) kennzeichnende Konstante und

$B_{soll}$ das von der Auswerteeinrichtung 15 vorgegebene Soll-Bremskraftsignal

sind.

Mit dem Rechnungs-Bremsdrucksignal vergleicht die Vergleichseinrichtung 5 das von dem Bremsdrucksensor 3a gelieferte Ist-Bremsdrucksignal für $p_{ist}$. Übersteigt das Ist-Bremsdrucksignal das Rechnungs-Bremsdrucksignal ($p_{ist} > p_{Rech}$) um ein vorbestimmtes Maß, so gibt die Vergleichseinrichtung 5 ein Warnsignal ab, welches die Warneinrichtung 8 einschaltet, die daraufhin ein optisches oder akustisches Signal abgibt. Die Warneinrichtung 8 kann aber auch als Bremsentlastungseinrichtung ausgebildet sein, derart, daß sie bei Erhalt des Warnsignals in der weiter vorn beschriebenen Weise in die Steuerung des Ventils 4a eingreift. Zu diesem Zweck kann die Warneinrichtung 8 mit der Auswerteeinrichtung 15 in nicht dargestellter Weise direkt verbunden sein.

Entsprechend der vorstehenden Beschreibung sind das s-Signal die Führungsgröße, die Bremskraft die Regelgröße und der Ist-Bremsdruck die Stellgröße der Regeleinrichtung.

In gleicher Weise wie vorstehend für die Fahrzeugbremse 1a erläutert, wirken die Regelelektronik und, in Verbindung mit dem jeweiligen Bremsdrucksensor, die Vergleichseinrichtungen 5 und 7 auch für die anderen Fahrzeugbremsen 1b, 11a, 11b. Bei der Errechnung des Soll-Bremskraftsignals sowie des Rechnungs-Bremsdrucksignals für die Fahrzeugbremsen 11a,11b des HA-Kreises berücksichtigt die Auswerteeinrichtung 15 den Beladungszustand der HA. In die Berechnung der genannten Sollwerte für die Radbremsen 11a,11b der HA geht ein mittels des Lastsignals des Lastsensors 13 gewonnener, den Beladungszustand der Hinterachse kennzeichnender Faktor $i_{ALB}$ ein, so daß die Auswerteeinrichtung 15 auch die Funktion eines lastabhängigen Bremsdruckreglers (ALB) übernimmt. Darüber hinaus ist in Abhängigkeit des Lastsignals des Lastsensors 13 in bekannter Weise die Vorderachse mit den Radbremsen 1a, 1b mitregelbar.

Unter Berücksichtigung dessen ist die allgemeine Formel (I) für den Rechnungs-Bremsdruck für die VA in

$$p_{VRech} = \frac{B_{soll\ V}}{A_V} \qquad (II)$$

und für die HA in

$$p_{HRech} = \frac{B_{sollH}}{A_H} \qquad (III)$$

zu modifizieren, wobei der Index "V" für die VA und der Index "H" für die HA gelten. Bei der Vorgabe von $B_{sollV}$ und $B_{sollH}$ berücksichtigt die Auswerteeinrichtung 15 das Lastsignal des Lastsensors 13.

In nicht näher erläuterter Weise können die Fahrzeugbremsen des VA-Kreises und/oder die Fahrzeugbremsen des HA-Kreises auch über ein gemeinsames elektrisch steuerbares Ventil mit dem jeweiligen Bremsdruckvorrat verbindbar sein, in welchem Falle sich die vorstehend beschriebenen Vorgänge achsweise abspielen. Neben der Verringerung der Zahl der elektrisch steuerbaren Ventile hätte diese Lösung den Vorteil vereinfachter Ausbildungen der Auswerteeinrichtung, der Vergleichseinrichtung(en) sowie der Einsparung von Bremsdruck- und Bremskraftsensoren.

Die Warneinrichtung 8 kann derart ausgebildet sein, daß sie auch diejenige(n) Fahrzeugbremse(n) anzeigt, von deren Vergleichseinrichtung sie ausgelöst wurde.

Für die in Fig. 2 dargestellte Bremsanlage, deren Regelgröße die Fahrzeugverzögerung ist, gelten die zu Fig. 1 gegebenen Erläuterungen mit den aus dem Folgenden ersichtlichen Abweichungen entsprechend.

Vorausgeschickt sei, daß im folgenden mit Fahrzeugverzögerung stets die Verzögerung in zur Fahrbahnoberfläche paralleler Richtung gemeint ist.

Mit 21 ist ein Verzögerungssensor bezeichnet, der ein von der Fahrzeugverzögerung abhängiges Verzögerungssignal liefert. Gewonnen werden kann dieses Verzögerungssignal beispielsweise mittels eines Radverzögerungssensors.

Da bei dieser Art Betätigungseinrichtung eine Aufteilung der Regelgröße auf die einzelnen Fahrzeugbremsen nicht möglich ist, sind für die Fahrzeugbremsen der VA und der HA jeweils ein gemeinsames elektrisch steuerbares Ventil 4 bzw, 9 und ein gemeinsamer Bremsdrucksensor 3 bzw. 10 vorgesehen.

Da bei dieser Art Betätigungseinrichtung einem gegebenen s-Signal ein Fahrzeugverzögerungs-Sollwert zugeordnet wird, ist die Ermittlung von $p_{Rech}$ nur unter Berücksichtigung des Fahrzeuggewichts und der Fahrbahnneigung möglich. Deshalb weist dieses Ausführungsbeispiel einen Winkelsensor 22 für die Fahrbahnneigung $\propto$ und zusätzlich zu dem Lastsensor 13 einen Lastsensor 20 für die VA-Last auf.

Da, wie aus der weiter unten angegebenen Formel (IV) leicht entnehmbar ist, bei diesem Ausführungsbeispiel das Rechnungs-Bremsdrucksignal nur für die Fahrzeugbremsen einer Achse gebildet zu werden braucht, ist auch nur eine Vergleichseinrichtung 23 vorgesehen. Da im vorliegenden Fall von dem Rechnungs-Bremsdrucksignal für die Fahrzeugbremsen 1a, 1b der VA ausgegangen wird, ist die Vergleichseinrichtung 23 mit dem Bremsdruckgeber 3 der VA verbunden. Die Vergleichseinrichtung 23 ist ferner außer mit dem Bremswertgeber 6 und der Warneinrichtung8 mit den Lastsensoren 13,20 verbunden.

Die in diesem Fall mit 24 bezeichnete Auswerteeinrichtung ist außer mit dem Bremswertgeber 6 und den Ventilen 4,9 sowie dem Lastsensor 13 auch mit dem Lastsensor 20, dem Verzögerungssensor 21, dem Winkelsensor 22 und den Bremsdrucksensoren 3, 10 verbunden.

Die Auswerteeinrichtung 24 bildet in Verbindung mit den ihr zugeordneten Sensoren wieder die Regelelektronik und kann ganz oder teilweise mit der Vergleichseinrichtung 23 körperlich und/oder elektrisch vereinigt sein.

Bei Betätigung des Bremswertgebers 6 bildet die Auswerteeinrichtung 24 anhand des zugeführten s-Signals ein Soll-Fahrzeugverzögerungssignal. Mit diesem Soll-Fahrzeugverzögerungssignal vergleicht die Auswerteeinrichtung 24 das von dem Verzögerungssensor 21 gelieferte Ist-Verzögerungssignal. Dabei steuert die Auswerteeinrichtung 24 die Ventile 4,9 so lange in Öffnungsstellung, bis die genannten Verzögerungssignale mit vorbestimmter Genauigkeit übereinstimmen. Dabei hält die Auswerteeinrichtung 24 ein durch den Faktor $i_{ALB}$ lastabhängig erforderliches Verhältnis des HA-Bremsdrucks zum VA-Bremsdruck ein. Sie wirkt also gleichzeitig als ALB. Zu diesem Zweck dient die Verbindung der Bremsdrucksensoren 3,10 mit der Auswerteeinrichtung 24. Der Faktor $i_{ALB}$ kann dabei anhand der Lastsignale des Lastsensors 13 in der Vergleichseinrichtung 23 und/oder der Auswerteeinrichtung 24 errechnet werden.

Gleichzeitig bilden die Vergleichseinrichtung 23 und/oder die Auswerteeinrichtung 24 aus den Lastsignalen der Lastsensoren 13,20 ein Fahrzeuggewichtssignal, welches die Vergleichseinrichtung 23 unter Zugrundelegung der Beziehung

$$p_{VRech} = \frac{m \cdot g \; (B(s) + \sin\alpha)}{2\,(A_V + A_H \cdot i_{ALB})} \qquad (IV)$$

zur Bildung eines Rechnungs-Bremsdrucksignals für den VA-Kreis heranzieht, wobei

g die Erdbeschleunigung,
B(s) eine in der Auswerteeinrichtung 24 gebildete Umrechnung von s in den Fahrzeugverzögerungs-Sollwert, angegeben in % bezogen auf g,
$\alpha$ die Fahrbahnneigung,
m die Fahrzeugmasse,
V Index für Vorderachse,
H Index für Hinterachse

sind.

Die Fahrzeugmasse m wird wie vorstehend beschrieben, aus den Achslastsignalen der VA (Lastsensor 20) und der HA (Lastsensor 13) bestimmt. Es gibt aber auch Fahrzeuge, die aufgrund ihrer Bauart und überwiegenden Beladungsart (z.B. gewisse Flüssigkeitstransporter und Kipper-Muldenfahrzeuge zum Schüttguttransport) eine akzeptable Massenbestimmung mit nur einem Achslastsensor zulassen. Bei diesen Fahrzeugen ändert sich die Belastung der VA mit ausreichender Genauigkeit proportional zur Belastung der HA, so daß ein HA-Lastsignal eine ausreichende Fahrzeuggesamtmassenbestimmungzuläßt. Diese Aussage gilt für den Fall der Lastsensierung nur der VA in entsprechender Weise. Diese Ausgestaltungen bieten als Vorteil den Wegfall eines der Lastsensoren 13 oder 20 und eine Vereinfachung der Auswerteeinrichtung 24.

Beim Ausführungsbeispiel nach Fig. 2 ist also das s-Signal die Führungsgröße, die Fahrzeugverzögerung die Regelgröße und der Ist-Bremsdruck die Stellgröße der elektrischen Regeleinrichtung.

Die in den Ausführungsbeispielen erwähnten Vergleichseinrichtungen können so ausgebildet sein, daß sie eine Abweichung des $p_{ist}$ vom $P_{Rech}$ in Form eines Belastungsfaktors

$$F = \frac{p_{ist}}{p_{Rech}}$$

erfassen. Das Warnsignal kann in diesem Falle ausgelöst werden, wenn der Belastungsfaktor F einen Grenzwert, der beispielsweise F = 1,2 betragen kann, erreicht.

Ausgehend von den erwähnten Beziehungen (I) bis (IV) und von der Tatsache, daß mit einer Bremsüberlastung eine Veränderung der bereits definierten Konstanten A, hauptsächlich durch Änderung der inneren Kennung der überlasteten Fahrzeugbremse, in A' einhergeht, kann F im Falle des Ausführungsbeispiels nach Fig. 1

$$F = \frac{B(s)}{A'} \cdot \frac{A}{B(s)} = \frac{A}{A'} \quad (V)$$

und im Falle des Ausführungsbeispiels nach Fig. 2 entsprechend

$$F = \frac{A_V + A_H \cdot i_{ALB}}{A_V' + A_H' \cdot i_{ALB}} \quad (VI)$$

geschrieben werden. Im letztgenannten Fall kann es auch vorkommen, daß nur $A_V$ oder $A_H$ sich auf einen Wert $A_V'$ bzw. $A_H'$ geändert haben.

Die vorstehend anhand der Figuren 1 und 2 beschriebenen Ausführungsbeispiele lassen sich mit einfachen Mitteln auch in eine andere Ausführungsform der Erfindung umstellen, welche die mittels des jeweiligen Bremsdruckes erzeugte Ist-Bremskraft mit einer durch diesen Bremsdruck sowie durch die Auslegungsdaten der Bremse und der Zuspanneinrichtung bestimmten Rechnungs-Bremskraft vergleicht und das Warnsignal abgibt, wenn die Ist-Bremskraft um einen vorbestimmten Wert von der Rechnungs-Bremskraft abweicht. Für den Fachmann offensichtlich, können dabei anstelle der genannten Bremskräfte auch die entsprechenden Bremsmomente betrachtet werden. Die erwähnten Auslegungsdaten der Bremse und der Zuspanneinrichtung werden dabei durch bereits erläuterte Konstante A repräsentiert.

Zur Realisierung der soeben erwähnten anderen Ausführungsform der Erfindung sind im Fall des Ausführungsbeispiels nach Fig. 1 nur nachstehende Maßnahmen erforderlich, die zunächst wieder am Beispiel der Fahrzeugbremse 1a und der zugeordneten Einrichtungen beschrieben werden:

- das Ist-Bremsdrucksignal des Bremsdrucksensors 3a wird statt der Vergleichseinrichtung 5 der Auswerteeinrichtung 15 zugeführt,
- die Auswerteeinrichtung 15 ist so ausgebildet, daß sie anstelle des Rechnungs-Bremsdrucksignals unter entsprechender Anwendung der Beziehungen (I), (II) aus dem Ist-Bremsdrucksignal ein Rechnungs-Bremskraftsignal errechnet und der Vergleichseinrichtung 5 zuführt,
- das Ist-Bremskraftsignal des Bremskraftsensors 2a wird außer der Auswerteeinrichtung 15 auch der Vergleichseinrichtung 5 zugeführt, die in diesem Falle das Ist-Bremsdrucksignal nicht benötigt,
- die Vergleichseinrichtung 5 ist so ausgebildet, daß sie anstelle der genannten Bremsdrucksignale das Ist-Bremskraftsignal mit dem Soll-Bremskraftsignal vergleicht und bei einer Abweichung um ein vorbestimmtes Maß die Warneinrichtung 8 in dem weiter oben beschriebenen Sinne steuert.

Durch die beschriebenen Maßnahmen wird in die Regeleinrichtung selbst nicht eingegriffen; Führungsgröße, Regelgröße und Stellgröße bleiben unbeeinflußt.

Das mit den vorstehend beschriebenen Maßnahmen in die andere Ausführungsform der Erfindung überführte Ausführungsbeispiel nach Fig. 1 läßt sich durch zusätzliche einfache Maßnahmen in eine Ausbildung der anderen Ausführungsform der Erfindung umbilden, in der nicht mehr die Bremskraft, sondern der Bremsdruck die Regelgröße ist. Zu diesem Zweck muß die Auswerteeinrichtung 15 so ausgebildet sein, daß sie aus dem s-Signal ein Soll-Bremsdrucksignal bildet und anhand des Ist-Bremsdrucksignals des Bremsdrucksensors 3 a den Ist-Bremsdruck durch Steuerung des Ventils 4a auf den Soll-Bremsdruck regelt. Das Ist-Bremskraftsignal des Bremskraftsensors 2a braucht in diesem Falle der Auswerteinrichtung 15 überhaupt nicht mehr, sondern nur noch der Vergleichseinrichtung 5 zugeführt zu werden.

Bei der zuletzt genannten Ausbildung der anderen Ausführungsform der Erfindung können schließlich der Bremswertgeber 6 in Verbindung mit dem Ventil 4a sowie der Auswerteeinrichtung 15 durch ein in bekannter Weise aufgebautes und deshalb hier nicht näher beschriebenes Bremsventil ersetzt werden, welches bei Betätigung aus einem Vorrat Bremsdruck zur Fahrzeugbremse 1a aussteuert. In diesem Fall könnte auch der Bremsdrucksensor 3a entfallen und die Vergleichseinrichtung 5 statt aus dessen Ist-Bremsdrucksignal direkt aus der Führungsgröße des Bremsventils (Betätigungskraft oder -weg oder -winkel) das Rechnungs-Bremskraftsignal bilden.

Für den Fachmann ist offenkundig, daß die vorstehend für die Fahrzeugbremse 1a gemachten Aussagen für die anderen Fahrzeugbremsen der in Fig. 1 dargestellten Bremsanlage entsprechend

anwendbar sind.

Auch alle weiteren oben zum Ausführungsbeispiel nach Fig. 1 gemachten Aussagen gelten für die beschriebenen Ausbildungen der anderen Ausführungsform der Erfindung in entsprechender Weise.

Soll das Ausführungsbeispiel nach Fig. 2 auf die genannte andere Ausführungsform der Erfindung umgestellt werden, so muß zu diesem Zweck an wenigstens einer Radbremse jedes Bremskreises ein Bremskraftsensor vorgesehen werden, dessen Ist-Bremskraftsignal der Vergleichseinrichtung 23 bzw. einer weiteren Vergleichseinrichtung zugeführt wird. Die darüber hinaus erforderlichen Maßnahmen hinsichtlich der Ausbildung der Auswerteeinrichtung 24, der Vergleichseinrichtung 23, der etwaigen weiteren Vergleichseinrichtung sowie deren Verbindung mit den Bremsdruck- und Bremskraftsensoren ergeben sich unter entsprechender Anwendung der zum Ausführungsbeispiel nach Fig. 1 gemachten Ausführungen.

Auch im Falle der anderen Ausführungsform der Erfindung kann zur Erfassung der Abweichung der Rechnungs-Bremskraft von der Ist-Bremskraft ein Belastungsfaktor gebildet werden, der, wie nachstehende Überlegungen zeigen, mit dem weiter oben definierten F identisch ist. Es sei angesetzt

$$F = \frac{\text{Rechnungs-Bremskraft}}{\text{Ist-Bremskraft.}} \qquad \text{(VII)}$$

Dieser Ausdruck läßt sich unter entsprechender Benutzung der Zusammenhänge (I) bis IV) und nach deren Umformung als

$$F = \frac{p_{ist} \cdot A}{p_{ist} \cdot A'} = \frac{A}{A'}$$

für den Fall des umgestellten Ausführungsbeispiels nach Fig. 1 und als

$$F = \frac{p_{ist} \cdot 2\,(A_V + A_H \cdot i_{ALB})}{p_{ist} \cdot 2\,(A'_V + A'_H \cdot i_{ALB})} = \frac{A_V + A_H \cdot i_{ALB}}{A'_V + A'_H \cdot i_{ALB}}$$

für den Fall des umgestellten Ausführungsbeispiels nach Fig. 2 (wobei wieder nur $A_V$ oder $A_H$ den Wert $A'_V$ bzw. $A'_H$ angenommen haben können) schrieben.

Der Ansatz (VII)führt also identisch zu den Beziehungen (V) bzw. (VI).

Im übrigen gelten für die Ausführungsbeispiele nach den Fig. 1 und 2 alle einleitend gemachten Ausführungen entsprechend.

Es liegt auf der Hand, daß mit den vorstehenden Ausführungen der Anwendungsbereich der vorliegenden Erfindung nicht erschöpfend beschrieben ist. Insbesondere kann der Bremsdruck mittels pneumatischen oder hydraulischen Druckmittels aufgebracht werden.

## Ansprüche

1. Überlast-Schutz- und/oder -Warneinrichtung für eine durch Beaufschlagung einer Zuspanneinrichtung mit Bremsdruck betätigbare Fahrzeugbremse, wobei der Bremsdruck der Zuspanneinrichtung mittels einer Betätigungseinrichtung (6, 15; 6, 24) zugeführt wird, mit einer Auswerteeinrichtung zur Gewinnung eines Warnsignals,

gekennzeichnet durch folgende Merkmale:

a) die Auswerteeinrichtung ist als Vergleichseinrichtung (5, 7, 23) ausgebildet, welche den Ist-Bremsdruck $p_{ist}$ mit einem Rechnungs-Bremsdruck $p_{Rech}$ vergleicht und das Warnsignal abgibt, wenn der Ist-Bremsdruck $P_{ist}$ um einen vorbestimmten Wert von dem Rechnungs-Bremsdruck $P_{Rech}$ abweicht;

b) der Rechnungs-Bremsdruck $p_{Rech}$ ist eine von dem Stellweg oder dem Stellwinkel eines Stellglieds der Betätigungseinrichtung (6, 15; 6, 24) oder von der auf das Stellglied ausgeübten Betätigungskraft sowie von Betriebsdaten des Fahrzeugs und/oder von den Auslegungsdaten der Bremse (1a, 1b, 11a, 11b) und der Zuspanneinrichtung bestimmte Größe;

c) der Ist-Bremsdruck $p_{ist}$ ist der der Zuspanneinrichtung bei dem jeweiligen Stellweg bzw. Stellwinkel des Stellglieds oder der jeweils darauf ausgeübten Betätigungskraft zugeführte Bremsdruck.

**2.** Die mittels eines Bremsdrucks erzeugte Ist-Bremskraft bzw. das entsprechende Ist-Bremsmoment auswertende Überlast-Schutz- und/oder -Warneinrichtung für eine durch Beaufschlagung einer Zuspanneinrichtung mit Bremsdruck betätigbare Fahrzeugbremse, mit einer Auswerteeinrichtung zur Gewinnung eines Warnsignals,

gekennzeichnet durch folgende Merkmale:

a) die Auswerteeinrichtung ist als Vergleichseinrichtung (5, 7, 23) ausgebildet, welche die Ist-Bremskraft bzw. das Ist-Bremsmoment mit einer Rechnungs-Bremskraft bzw. dem entsprechenden Rechnungs-Bremsmoment vergleicht und das Warnsignal abgibt, wenn die Ist-Bremskraft bzw. das Ist-Bremsmoment um einen vorbestimmten Wert von der RechnungsBremskraft bzw. dem Rechnungs-Bremsmoment abweicht;

b) die Rechnungs-Bremskraft bzw. das Rechnungs-Bremsmoment ist eine durch den jeweiligen Bremsdruck sowie durch die Auslegungsdaten der Bremse (1a, 1b, 11a, 11b) und der Zuspanneinrichtung bestimmte Größe.

**3.** Überlast-Schutz- und/oder -Warneinrichtung nach Anspruch 1 oder Anspruch 2,
gekennzeichnet durch folgende Merkmale:

die Betätigungseinrichtung (6,15;6,24) ist als elektrische Regeleinrichtung für die Bremskraft bzw. das Bremsmoment oder für die Fahrzeugverzögerung mit dem Stellweg bzw. Stellwinkel des Stellglieds oder der auf das Stellglied ausgeübten Betätigungskraft als Führungsgröße, der Bremskraft bzw. dem Bremsmoment oder der Fahrzeugverzögerung als Regelgröße und dem der Zuspanneinrichtung zugeführten Bremsdruck als Stellgröße ausgebildet.

**4.** Überlast-Schutz- und/oder-Warneinrichtung nach Anspruch 2,
gekennzeichnet durch folgende Merkmale:

es ist ein Bremsventil vorgesehen, welches nach Maßgabe einer auf das Bremsventil einwirkenden Betätigungskraft oder des Stellwegs oder Stellwinkels eines Stellglieds des Bremsventils die Höhe des Bremsdrucks steuert.

## Claims

**1.** An overload protection and/or warning arrangement for a vehicle brake operable by admission of brake pressure to a brake application device, the brake pressure being supplied to the brake application device by means of an operating device (6, 15; 6, 24), with an evaluator for obtaining a warning signal,

characterized by the following features:

a) the evaluator is constructed as a comparator (5, 7, 23) which compares the actual brake pressure $p_{ist}$ with a calculation brake pressure $p_{Rech}$ and delivers the warning signal whenever the actual brake pressure $p_{ist}$ deviates by a predetermined value from the calculation brake pressure $p_{Rech}$;

b) the calculation brake pressure $p_{Rech}$ is a variable determined from the travel or the angle of an actuator of the operating device (6, 15; 6, 24) or from the braking force exerted on the actuator and also from operating data of the vehicle and/or from the design data of the brake (1a, 1b, 11a, 11b)

and of the brake application device;
c) the actual brake pressure $p_{ist}$ is the brake pressure supplied to the brake application device upon the relevant travel or angle of the actuator or the actuating force exerted thereon.

**2.** An overload protection and/or warning arrangement evaluating the actual braking force generated by means of a brake pressure, or the corresponding actual braking torque, for a vehicle brake operable by admission of brake pressure to a brake application device, with an evaluator for obtaining a warning signal,

characterized by the following features:
a) the evaluator is constructed as a comparator (5, 7, 23) which compares the actual braking force or the actual braking torque with a calculation braking force or the corresponding calculation braking torque and delivers the warning signal whenever the actual braking force or actual braking torque deviates by a predetermined value from the calculation braking force or the calculation braking torque;
b) the calculation braking force or the calculation braking torque is a variable determined by the respective brake pressure and by the design data of the brake (1a, 1b, 11a, 11b) and of the brake application device.

**3.** An overload protection and/or warning arrangement according to claim 1 or claim 2, characterized by the following features:

the operating device (6, 15; 6, 24) is constructed as an electrical controlling system for the braking force or the braking torque or for the vehicle deceleration, with the travel or angle of the actuator or the actuating force exerted on the actuator as the reference variable, the braking force or braking torque or the vehicle deceleration as the controlled variable and the brake pressure supplied to the brake application device as the manipulated variable.

**4.** An overload protection and/or warning arrangement according to claim 2, characterized by the following features:

a brake valve is provided which controls the level of the brake pressure in dependence on an actuating force effective on the brake valve or on the travel or angle of an actuator of the brake valve.

## Revendications

**1.** Dispositif de protection et/ou d'alarme contre les surcharges pour un frein de véhicule actionné en appliquant une pression de freinage à un dispositif de serrage, où la pression de freinage du dispositif de serrage est amenée par un dispositif d'actionnement (6, 15 ; 6, 24), avec un dispositif de traitement pour l'obtention d'un signal d'alarme, caractérisé en ce que :
a) le dispositif de traitement est un dispositif de comparaison (5, 7, 23) qui compare la pression de freinage réelle $p_{réel}$ avec une pression de freinage théorique $p_{théor}$ et génère le signal d'alarme lorsque la pression de freinage réelle $p_{réel}$ diverge d'une valeur prédéterminée par rapport à la pression de freinage théorique $p_{théor}$ ;
b) la pression de freinage théorique $p_{théor}$ est une grandeur déterminée par la course ou l'angle de réglage d'un organe de réglage du dispositif d'actionnement (6, 15 ; 6, 24) ou par la force d'actionnement exercée sur l'organe de réglage ainsi que par les caractéristiques de fonctionnement du véhicule et/ou les caractéristiques de conception du frein (1a, 1b, 11a, 11b) et du mécanisme de serrage ;
c) la pression de freinage réelle $p_{réel}$ est la pression de freinage appliquée au dispositif de serrage pour la course ou l'angle de réglage de l'organe de réglage ou pour la force d'actionnement qui est exercée sur lui.

**2.** Dispositif de protection et/ou d'alarme contre les surcharges analysant la force de freinage réelle ou le couple de freinage réel obtenu à l'aide d'une pression de freinage, pour un frein de véhicule actionné en appliquant une pression de freinage à un dispositif de serrage, avec un dispositif de traitement pour l'obtention d'un signal d'alarme, caractérisé en ce que :

a) le dispositif de traitement est un dispositif de comparaison (5, 7, 23) qui compare la force de freinage réelle ou le couple de freinage réel à une force de freinage théorique ou à un couple de freinage théorique correspondant et génère le signal d'alarme lorsque la force de freinage réelle ou le couple de freinage réel diverge d'une valeur prédéterminée par rapport à la force de freinage théorique ou au couple de freinage théorique ;
b) la force de freinage théorique ou le couple de freinage théorique est une grandeur déterminée par la pression de freinage ainsi que par les caractéristiques de conception du frein (1a, 1b, 11a, 11b) et du mécanisme de serrage.

**3.** Dispositif de protection et/ou d'alarme contre les surcharges selon la revendication 1 ou 2, caractérisé en ce que le dispositif d'actionnement (6, 15 ; 6, 24) est un dispositif électrique de régulation de la force de freinage ou du couple de freinage, ou de la décélération du véhicule, où la course ou l'angle de réglage de l'organe de réglage ou la force d'actionnement appliquée à l'organe de réglage constitue la grandeur de référence, la force de freinage ou le couple de freinage ou encore la décélération du véhicule la grandeur réglée et la pression de freinage appliquée au dispositif de serrage la grandeur réglante.

**4.** Dispositif de protection et/ou d'alarme contre les surcharges selon la revendication 2, caractérisé en ce qu'il est prévu une vanne de frein qui, en fonction de la force d'actionnement exercée sur elle, ou de la course ou de l'angle de réglage d'un organe de réglage de cette vanne de frein, commande l'amplitude de la pression de freinage.

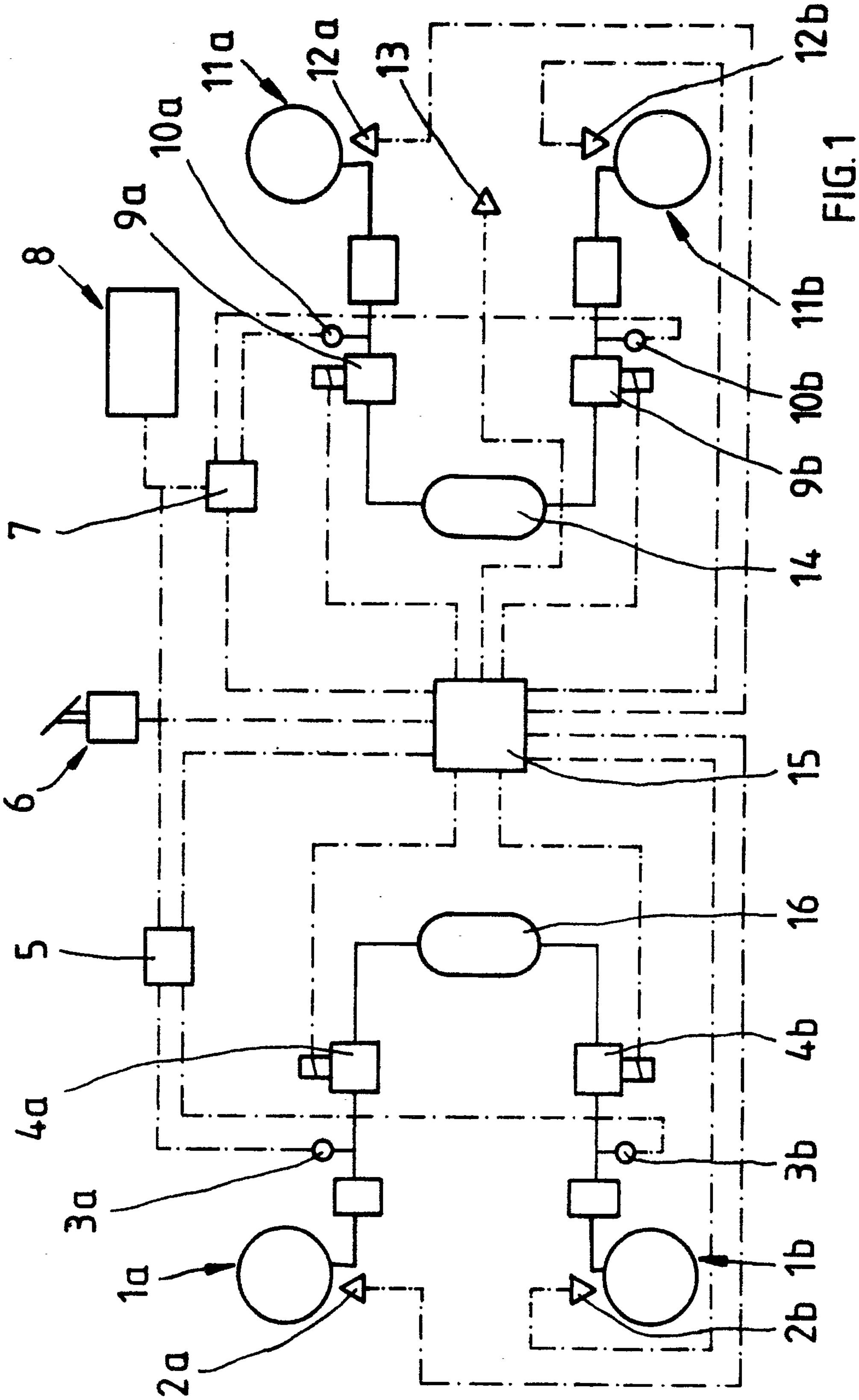
1a
1b
2a
2b
3a
3b
4a
4b
5
6
7
8
9a
9b
10a
10b
11a
11b
12a
12b
13
14
15
16

FIG.1

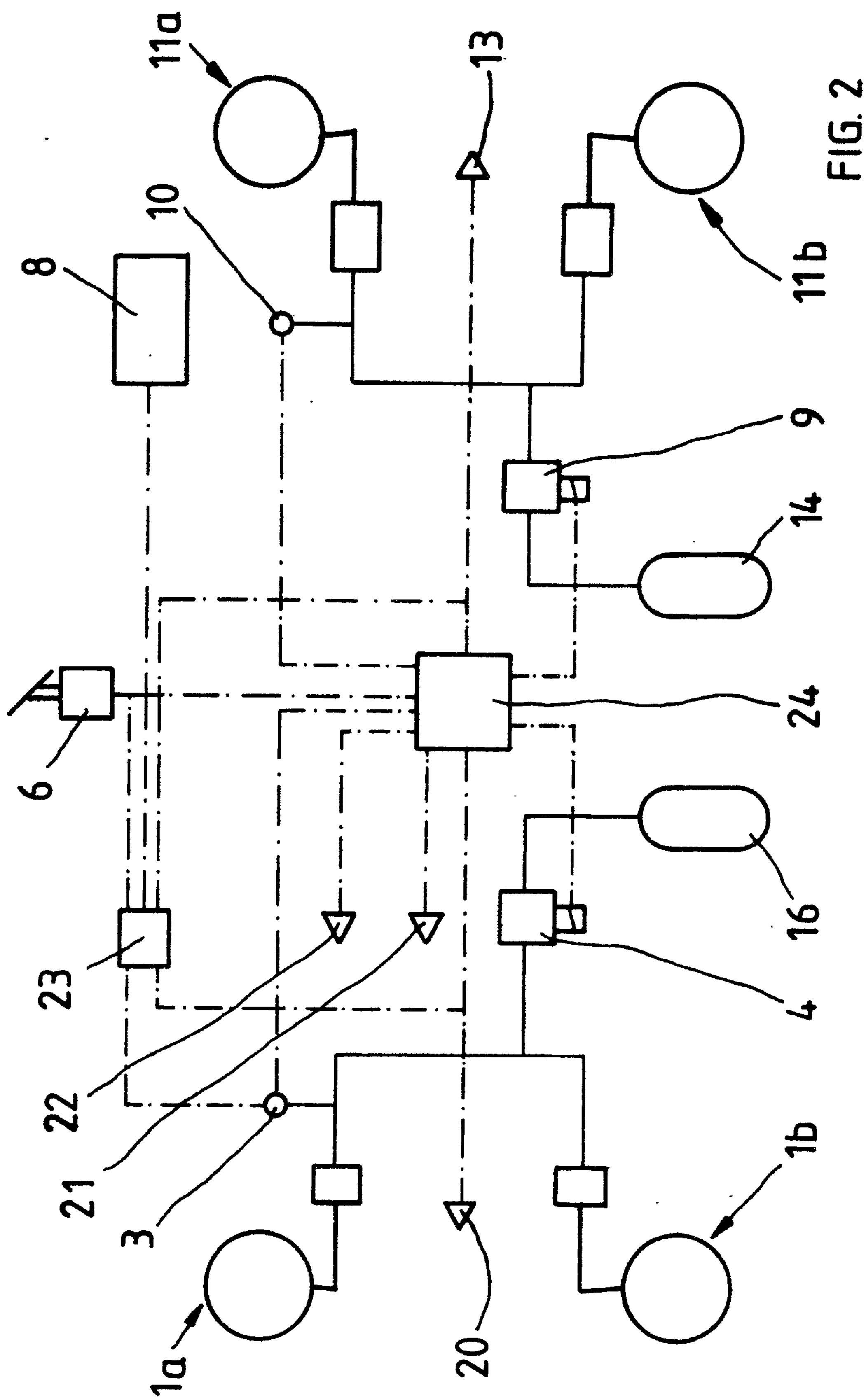


FIG. 2